# EUROPEAN PATENT SPECIFICATION

(11) **EP 4 267 711 B1**
(45) Date of publication and mention of the grant of the patent: **30.07.2025**
(21) Application number: 21844816.5
(22) Date of filing: 22.12.2021
(51) Int. Cl.: C12G 3/07, C12H 1/22, C12J 1/08, G05D 7/00

(54) **CONTROL METHOD FOR AN AGEING PROCESS OF ALCOHOLIC BEVERAGES AND PLANT FOR ACTUATING SUCH A METHOD**
VERFAHREN ZUR STEUERUNG EINES ALTERUNGSPROZESSES ALKOHOLISCHER GETRÄNKE UND ANLAGE ZUR DURCHFÜHRUNG EINES SOLCHEN VERFAHRENS
PROCÉDÉ DE RÉGULATION D'UN PROCESSUS DE VIEILLISSEMENT DE BOISSONS ALCOOLISÉES ET INSTALLATION POUR LA MISE EN OEUVRE D'UN TEL PROCÉDÉ

(30) Priority: 28.12.2020 IT 202000032482
(43) Date of publication of application: 01.11.2023
(73) Proprietor: OMNIA TECHNOLOGIES S.P.A., 31040 Trevignano (TV) (IT)
(72) Inventor: DELLA TOFFOLA, Francesco, 31040 Trevignano (TV) (IT); AMAMI, Yacine, Tunisi 2092 (TN)
(74) Representative: Dragotti & Associati S.R.L.
(86) International application number: PCT/IB2021/062156
(87) International publication number: WO 2022/144697

(56) References cited:
- WO-A1-2016/073744
- WO-A1-2020/208637
- ES-A1- 2 430 988
- IT-A1- 201900 001 353
- US-A1- 2011 129 589
- US-A1- 2017 292 100
- ALBERTO SNCHEZ ARRIBAS ET AL: "The role of electroanalytical techniques in analysis of polyphenols in wine", TRAC TRENDS IN ANALYTICAL CHEMISTRY, vol. 34, 26 January 2012 (2012-01-26), pages 78 - 96, XP028472045, ISSN: 0165-9936, [retrieved on 20120126], DOI: 10.1016/J.TRAC.2011.10.015

## Description

The present invention relates to a control method for a refinement process for alcoholic beverages, such as red, rosé and white wines, liqueurs, distilled beverages, beers and vinegars. The present invention relates moreover to a plant for implementing such a method. The invention is defined in the appended claims.

It is known that, at the end of the fermentation step, alcoholic beverages are subjected to a refinement step carried out inside special containers. This step consists in a more or less long period of maturation/ageing which allows the beverages to improve their organoleptic properties.

Refinement is preferably performed inside wooden barrels since the prolonged contact between the wood of the barrel and the beverage contained inside it allows the beverage to be enriched with substances released from the wood, such as tannins, vanillin and cinnamic aldehydes.

Moreover, during the time spent inside the barrels, the beverage is subject to a controlled release of oxygen, thereby avoiding violent oxygenation which would result in generalized uncontrolled oxidation of the beverage itself.

The oxygen passes in fact in a slow and continuous manner through the pores in the wood and this favours the complexation of the unstable proteins contained in the alcoholic beverage with the consequent advantages.

In the case of wines, for example, the oxygen favours the development and stabilization of the colour, as well as a reduction in the astringency with consequent enriching of the bouquet and taste.

Refinement is a process which takes place, therefore, during a period which is necessarily very long so as to allow the release of the substances from the wood to the beverage and an adequate combination of the substances released with those already present in the beverage.

In the case of red wine, for example, the best results are obtained after a period of between 12 and 24 months.

As already mentioned, refinement is preferably carried out inside barrels which have given characteristics and which undergo specific treatments in order to fix the aromatic and extractive substances which will be released to the beverage. One of the treatments most commonly used is "toasting" of the staves which will form the barrel.

The barrels used for refinement of the alcoholic beverages are usually made with oak wood, in particular sessile oak wood. In order to obtain a greater elasticity the wood of the trunk from plants which are aged between 120 and 240 years are used, boards being obtained from them and being seasoned in the open air for a period varying from 2 to 4 years.

One of the barrels most commonly used is the so-called "barrique bordelaise" (Bordeaux barrel), a barrel with a capacity of 225 litres with staves which have a thickness of between 18 and 25 mm.

Refinement may also be performed inside "tonneaux", i.e. barrels which have a variable capacity of between 500 and 700 litres and the staves of which have a thickness varying between 35 and 40 mm.

The known processes for refinement of alcoholic beverages, while being favourably regarded, are not without drawbacks.

Firstly, the alcoholic beverages must remain for a long period of time inside the barrels. This results in a considerable delay in the sale of the finished product and immobilization of a significant amount of capital.

Furthermore, with the passing of time, the wood of the barrels loses its capacity to enrich the beverage with which it comes into contact, since it has already released its aromas. Also, with the passing of time, the pores in the wood become obstructed and no longer allow correct micro-oxygenation. In the case of red wines, the barrels must be replaced on average after about three refinement cycles.

The replacement of the barrels involves obvious management costs which are increased by the fact that the barrels per se are costly, being made by specialized labour using high-quality wood.

Furthermore, the refinement operations must be supervised by highly specialized personnel who, based on their own personal experience, manage the various steps in such a way that the finished product has the desired organoleptic properties. In particular, the period of time for which the alcoholic beverage remains inside the barrels depends obviously on the type of barrel used and the type of beverage. In the case of wines, for example, it is the oenologist who decides, only after tasting, whether the refinement process may be considered completed or whether the wine must remain for longer inside the barrel.

This obviously results in a not insignificant variability and consequent lack of reliability as regards the end result.

Finally, the storage of the beverages inside the barrels for a long period of time also results in the need to perform a periodic filling operation in order to top up the barrels, using liquid with the same quality as that contained inside it, in order to compensate for the evaporation and the absorption of the said liquid by the wood. US 2017/292100 A1 relates to devices for enhancing the flavour of alcohol containing drinks through accelerated ageing and infusion.

The object of the present invention is therefore to overcome at least partially the drawbacks mentioned above with reference to the prior art.

In particular, a task of the present invention is to provide a control method for a refinement process for alcoholic beverages which is not subject to subjective and non-standardized operations.

A further task of the present invention is to provide a control method for a refinement process for alcoholic beverages which is more rapid and less costly than the known methods, without affecting the quality of the finished product.

Yet another task of the present invention is to provide a plant which is suitable for implementing such a control method.

The aforementioned object and tasks are achieved by a control method for a refinement process for alcoholic beverages in accordance with that claimed in Claim 1 and by a plant for implementing this control method in accordance with that claimed in Claim 14.

In order to illustrate the present invention and its advantages compared to the prior art, some examples of preferred embodiments of the invention will be described below with the aid of the attached drawings. The invention relates to a method and a plant according to appended claims 1 and 14 respectively. In the drawings:
- Figure 1 shows in schematic form a flow diagram of the various steps forming the control method according to the present invention;
- Figures 2 and 3 show in schematic form, in a simplified and complete version respectively, the components and the flow diagram of the plant according to the invention.

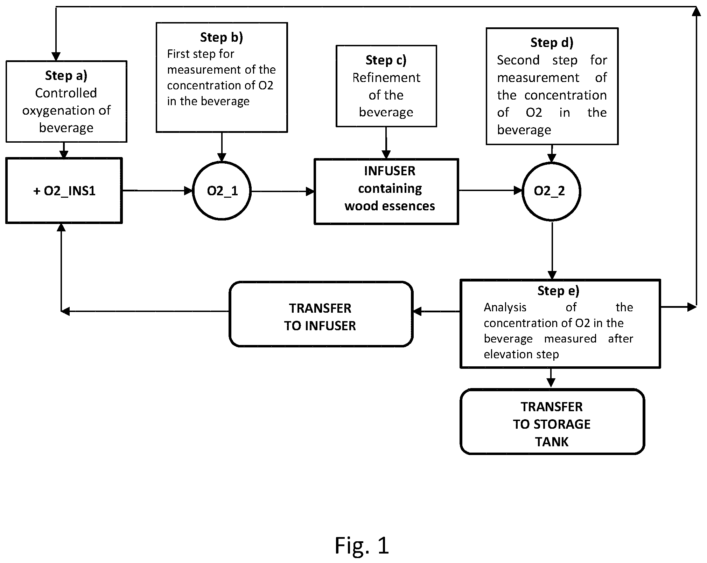

With reference to Figure 1, it illustrates in schematic form the steps of a control method for a refinement process for alcoholic beverages, for example included in the group consisting of wines, liqueurs, distilled beverages, beers and vinegars. Preferably the beverage of varying alcoholic strength undergoing refinement is obtained from a fermentation step.

The method according to the invention comprises a first step (a) of controlled oxygenation, by means of controlled blowing-in of a first quantity of oxygen O2_INS1 into the alcoholic beverage to undergo refinement.

Then the method comprises a first step (b) of measuring the concentration of oxygen dissolved in the alcoholic beverage to undergo refinement, in order to determine a first concentration value of the oxygen O2_1.

This first measurement step (b) is followed by a refinement step (c) in which the alcoholic beverage is placed in contact, inside an infuser, with one or more wood essences, in order to acquire the aromatic characteristics associated with said wood essences.

The method then involves, at the end of the refinement step c), a second step d) of measuring the concentration of oxygen dissolved in the alcoholic beverage, in order to determine a second concentration value of the oxygen O2_2.

This second measurement step d) is then followed by a step (e) of analysing or processing the second concentration value of the oxygen O2_2 dissolved in the alcoholic beverage once the refinement step c) has been performed.

Depending on the concentration value of the oxygen O2_2 measured, this processing step results in:
- return or recycling of the alcoholic beverage to the refinement step c) and/or the transfer of the alcoholic beverage inside a storage tank; and
- in a possible variation of the first quantity of oxygen O2_INS1 blown into the alcoholic beverage before the refinement step c).

Advantageously, the method according to the present invention allows the correct management of the amount of oxygen released to the alcoholic beverage so as to optimize the refinement step c), during which the alcoholic beverage is placed in contact with the wood essences.

In particular, the first controlled oxygenation step a) has the effect that the compounds released by the wood to the wine inside the infuser, such as the tannins and phenolic extracts, are fixed in a controlled manner and more rapidly to the alcoholic beverage undergoing refinement, thus favouring the polymerization of the tannins and enriching the taste and aroma of the beverage.

With reference to red wines, a correct management of the oxygen favours the development and stabilization of the colour due to the reaction between tannins and anthocyanins. At the same time, in red wines, the oxygen is responsible for the reduction in the astringency owing to the evolution of the tannins.

When the amount of oxygen supplied, however, is too high in relation to its usage it is likely that oxidation will occur.

With reference still to red wines, if there is an excessive dissolution of the oxygen in the wine, this results, for example, in the formation of acetaldehyde (MeCHO) which may develop into other aromatic compounds which are responsible for the typical sensorial nuances of oxidized wines.

With the method according to the present invention advantageously it is possible to administer the maximum quantity of oxygen which can be absorbed by the alcoholic beverage without the risk of oxidation occurring.

This allows the refinement process to be optimized, with a drastic reduction in the amount of time for which the beverage remains in contact with the wood essence.

As mentioned, the method according to the present invention involves a step e) of analysing the concentration of the oxygen O2_2 dissolved in the alcoholic beverage, measured when the beverage leaves the infuser.

Following this analysis step e), the method according to the present invention involves the carrying out of a further refinement step and/or transfer to a storage tank located downstream of the infuser.

In particular, carrying out of a further refinement step will be decided should the alcoholic beverage need to be further enriched with the substances present in the wood essences with which it has been placed in contact.

In other words, following the analysis step e), a first fraction of the alcoholic beverage flow resulting from the refinement step c) may be sent back to the same refinement step c), i.e. inside the infuser, and a second fraction, equal to the total flow less the first fraction, may be transferred inside the storage tank. For example, said first fraction may be equal to 30-40% of the beverage flow output from the refinement step and said second fraction may consequently vary between 70% and 60% of the beverage flow output from the refinement step.

In specific circumstances, said first fraction may be equal to 100% of the beverage flow output from the refinement step, so as to realize a batch processing cycle, or said second fraction may be equal to 100% of the beverage flow output from the refinement step, so as to realize a continuous processing cycle.

Preferably, the method according to the present invention may comprise, upstream of the first oxygenation step, a step of analysis or characterization of the alcoholic beverage.

This step of analysis and characterization of the alcoholic beverage advantageously may consist in electrochemical analysis of the beverage, preferably spectrometric analysis of the beverage.

This step is carried out to obtain an estimate of the quantity and the quality of the polyphenols contained in the alcoholic beverage before it undergoes the refinement step. Advantageously, the values measured during the alcoholic beverage batysis and characterization step are processed, together with the second concentration value of the oxygen O2_2, during the analysis step e) for determining any variation in the quantity of oxygen O2_INS1 to be blown into the beverage undergoing refinement.

At the same time, based on the values measured during the analysis and characterization step, a further evaluation of the degree of refinement of the alcoholic beverage may be obtained, namely whether this alcoholic beverage has been enriched sufficiently with the substances released by the wood essence.

Advantageously, the values measured during the alcoholic beverage analysis and characterization step are processed, together with the second concentration value of the oxygen O2_2, during the analysis step e), in order to establish the transfer or recycling of the alcoholic beverage to the refinement step c) and/or the transfer of the alcoholic beverage to the storage tank.

In other words, depending on the values measured, the fraction of the alcoholic beverage to be transferred again to the refinement step may therefore be varied.

In the case where the analysis step e), based on the values measured during the step of analysis and characterization of the alcoholic beverage undergoing refinement, establishes that the refinement of the alcoholic beverage is not yet sufficient, the quantity of wine which has been transferred to the storage container will also be recovered in order to be transferred again to the refinement step c), so as to ensure that all the alcoholic beverage at the end of the process according to present invention has reached the desired degree of refinement.

Preferably, the method according to the present invention may comprise, before the refinement step c), a first step for measuring the oxidation/reduction or redox potential of the alcoholic beverage in order to obtain a first redox reference value E1 and, after the refinement step, a second step for measuring the oxidation/reduction or redox potential of the alcoholic beverage in order to obtain a second redox reference value E2.

The measurement of the second redox value E2 and the subsequent comparison between the first redox value E1 and the second redox value E2 allow the objective determination of the quantity of tannins released by the wood essence with which the alcoholic beverage comes into contact inside the infuser during the refinement step c).

It is also possible to assess, when there is no divergence between the first redox value E1 and the second redox value E2, whether the wood essence used in the refinement step has become depleted and therefore needs to be replaced.

In fact, since during the refinement step there is a process involving structuring and harmonization of the alcoholic beverage which results in an increase in the redox potential measured at the output of the refinement step, in the case where there is no divergence or there is a minimum divergence between the first redox value E1 and the second redox value E2, this will indicate that the wood essence used during the refinement step has now become depleted and must therefore be replaced.

In this case, the method according to the present invention involves interruption of the refinement step so as to allow replacement of the wood essence.

A further mode of implementation of the method according to the present invention also involves a second step for controlled oxygenation of the alcoholic beverage by means of controlled blowing-in of a second quantity of oxygen O2_INS2 into the beverage output from the refinement step.

This further refinement step is carried out on the alcoholic beverage which has already been matured from the point of view of aroma during the refinement step.

The controlled blowing-in of oxygen during this step has the purpose of ageing the alcoholic beverage and smoothing the tannins which have been released to it by the wood essence during the refinement step.

In other words, the method according to the present invention may comprise a single oxygenation step which has the purpose of favouring the enrichment of the alcoholic beverage with the aromas released to it by the wood essence during the refinement step, or a first and second oxygenation step, such that the aromatic refinement is accompanied by ageing of the alcoholic beverage.

Advantageously, therefore, the method according to the present invention is able to obtain in a rapid and controlled manner aromatic refinement and ageing of the alcoholic beverage treated.

The second controlled oxygenation step is preferably followed by a third step of measuring the concentration of the oxygen dissolved in the alcoholic beverage, in order to determine a third concentration value of the oxygen O2_3.

This third oxygen value O2_3 will be analysed during the analysis step e), together with the second concentration value of the oxygen O2_2 and, if necessary, together with the values measured during the alcoholic beverage analysis and characterization step, so as to perform, at the end of the second oxygenation step, recycling of the alcoholic beverage to the refinement step and/or transfer of the alcoholic beverage to the storage tank or variation of the quantity of oxygen O2_INS2 to be blown into the alcoholic beverage.

Consequently, at the end of the second oxygenation step, based on the values measured during the analysis of the alcoholic beverage input into the refinement step and based on the oxygen concentration measured at the output of the refinement step and at the end of the second controlled oxygenation step, it may be established whether the alcoholic beverage requires a further refinement and/or oxygenation step or whether it may be transferred to the storage tank because it has reached the desired degree of refinement and ageing.

In the case where it is measured that the beverage has reached the desired degree of refinement and ageing, a fraction may in any case be transferred again to the infuser so as to accelerate the step of refinement and ageing of the new alcoholic beverage introduced into the circuit.

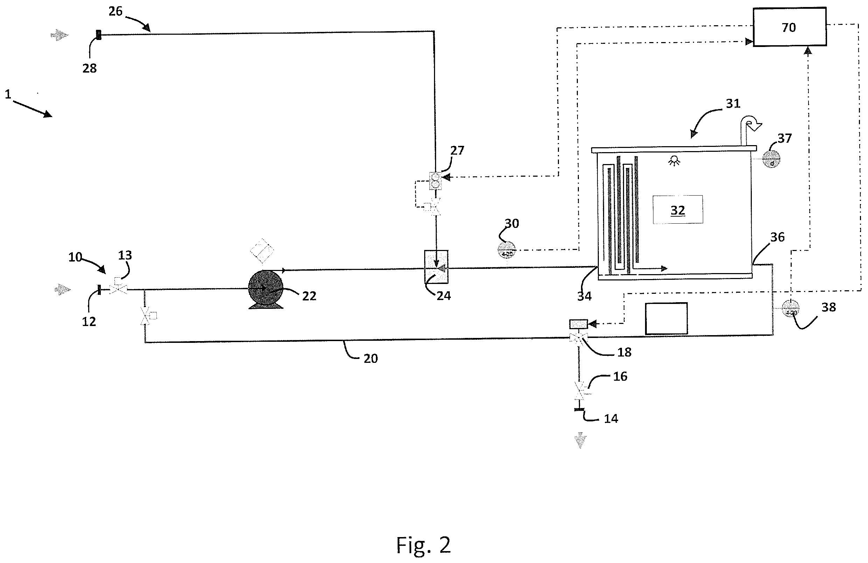

Considering now Figure 2, this figure shows the functional components and the flow diagram of a refinement plant 1 realized in accordance with the present invention.

The plant 1 for implementing the control method according to the invention is intended to receive the alcoholic beverage removed from a first tank, not shown in the attached figures, for transfer to a storage tank, also not shown in the attached figures.

The plant 1 comprises a supply duct 10 for the alcoholic beverage, provided with an inlet 12 and an outlet 14. Upstream of the outlet 14 there is arranged a diverter valve 18 designed to divert the alcoholic beverage introduced into the plant 1 towards the outlet 14 and/or towards a connection duct 20 in fluid communication with the supply duct 10.

The plant 1 further comprises a pump 22, preferably an electric pump, arranged along the supply duct 10, the delivery of said pump supplying a saturator, which is a device designed to introduce oxygen into the beverage undergoing refinement until it is saturated.

The saturator 24, which is preferably of the pressure type, is supplied with the oxygen introduced into the plant 1 via an auxiliary duct 26 provided with a flowmeter 27 for controlled dosage of the oxygen into the saturator 24. The first oxygenation step of the method is then performed in the saturator 24 where the beverage absorbs the given quantity of oxygen O2_INS1.

The plant 1 further comprises a first probe 30 for measuring the oxygen concentration, positioned downstream of the saturator 24 and able to measure the concentration of oxygen O2_1 dissolved in the beverage so as to perform the first oxygen concentration measurement step.

The plant 1 is also provided with an infuser 31 positioned downstream of said first oxygen measurement probe 30 and having a chamber 32 inside which the wood essence or wood essences intended to come into contact with the beverage undergoing refinement is/are arranged. The beverage refinement step is therefore performed in the infuser 31.

The function of the infuser 31 is in fact to allow contact between the beverage undergoing refinement and the wood essences contained in the infuser such that the essences may release to the beverage the corresponding tannins and aromas.

Depending on the wood essence present in the infuser the beverage will acquire for example a flavour with hints of vanilla, coffee, chocolate, etc.

The chamber 32 of the infuser is intended to be filled with the beverage undergoing refinement and filling thereof may be signalled by means of a probe 37.

The infuser 31 has an inlet 34 for the beverage undergoing refinement which circulates inside the chamber 32 under forced flow conditions and an outlet 36.

The infuser 31 may consist of a steel or cement tank inside which fragments of wood, in the form of chips or staves, may be immersed.

These fragments are preferably made with sessile oak wood and may have different forms and dimensions and be toasted more or less intensely depending on the beverage which is undergoing refinement.

The chips introduced inside the infuser are contained preferably in infusion bags of varying size.

The staves, instead, may be fixed to the cover or to the base of the infuser so as to be spaced from each other.

The infuser may also consist of a high-quality wood barrel with an inflow pipe connected to the inlet 34 and an outflow pipe connected to the outlet 36.

The infuser may also consist of a panel exchanger arranged so as to form a forced path for the beverage so as to optimize the contact between beverage and panels.

The plant 1 comprises, downstream of the infuser 31, a second probe 38 for measuring the oxygen concentration, able to measure the concentration of oxygen O2_2 dissolved in the beverage so as to perform the second oxygen concentration measurement step.

The plant furthermore comprises control means 70 for controlling the diverter valve 18 and the flowmeter 27.

Depending on the concentration value of the oxygen O2_2 measured by the second probe 38, the control means 70, by means of the diverter valve 18, direct the beverage towards the outlet 14 and/or towards the duct 20 from where it will be introduced again into the duct 10. In the case where the beverage is directed solely towards the outlet 14, the plant operates continuously, drawing in the beverage from the first storage tank and sending it to the second storage tank.

In the case where the beverage is directed solely towards the duct 20, the plant operates discontinuously (in batch mode). In this case, the alcoholic beverage flows inside the plant 1, so as to pass several times inside the infuser, before being directed towards the storage tank. By means of the diverter valve 18 it is also possible to send a first fraction of the beverage flow to the duct 20 and a second fraction of the beverage flow to the outlet 14, so as to form a mixed operating mode.

At the same time the control means 70 by operating the flowmeter 27 may vary the quantity of oxygen O2_INS1 blown into the beverage at the saturator 24.

The control means 70 is operated by means of a computerized control unit which automatically manages the controlled oxygenation of the beverage and the modes for transfer to the second storage tank.

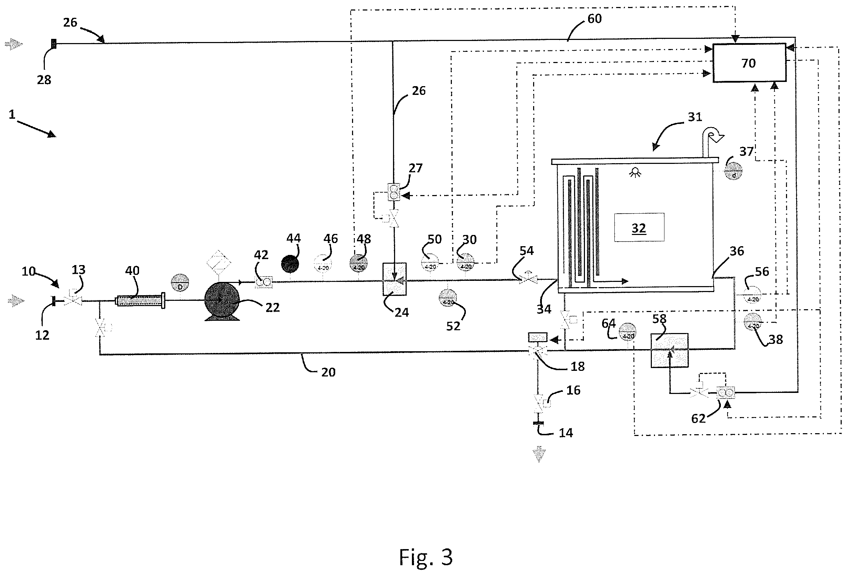

Figure 3 shows a preferred embodiment of the plant 1.

In this embodiment, upstream of the pump 22 there is arranged a pre-filter 40 designed to filter any solid components present in the beverage before it is introduced into the pump.

A flowmeter 42 for determining the beverage flow introduced into the infuser 31, a probe 44 for detecting the temperature, and a probe 46 for detecting the pH may be advantageously arranged between the pump 22 and the oxygen saturator 24.

Preferably, a probe 48 for characterization of the alcoholic beverage may be arranged upstream of the oxygen saturator 24. In particular, such a probe 48 allows the polyphenols contained in the alcoholic beverage to be estimated from a quantitative and qualitative point of view.

Said probe 48 may consist of a spectrometer, preferably a mass spectrometer, and even more preferably an electric impedance mass spectrometer.

At the probe 48, therefore, the step of analysis and characterization of the alcoholic beverage circulating in the plant is performed, said step preferably consisting in an electrochemical analysis of the beverage undergoing refinement.

The data detected by the probe 48 is sent to the control means 70 which check that the alcoholic beverage is in an optimum condition so that the result of the operation performed by the saturator 24 and the infuser 31 is effective.

The control means 70, even though not shown in Figure 3, will also process the data received from the probes 42, 44 and 46.

The plant 1 may comprise, furthermore, a first probe 50 and a second probe 56 for determining the oxidation/reduction potential of the alcoholic beverage E1, E2. The first probe 50 and the second probe 56 are positioned, respectively, upstream and downstream of the infuser 31. The first probe 50 measures a first redox reference value E1, before the beverage is introduced into the infuser 31, and the second probe 56 measures a second redox reference value E2, after the beverage has left the infuser 31.

Preferably, the first probe 50 is positioned between the saturator 24 and the first oxygen measurement probe 30, in the proximity of a probe for controlling the pressure 52, while the second probe 56 is positioned between the outlet 36 of the infuser 31 and the second oxygen measurement probe 38.

The oxidation/reduction values E1, E2 detected by the probes 50, 56 may be transmitted in a suitably processed form to the control means 70 which, should it be detected that the wood essence contained in the infuser has become depleted, may interrupt, by means of a one-way valve 54, the entry of the beverage into the infuser in order to allow the essence to be replaced.

The plant moreover may be provided with a second saturator 58, which is preferably of the pressure type, supplied with the oxygen introduced into the plant by means of a connection duct 60 provided with a flowmeter 62 for the controlled dosage of the oxygen in the saturator. The connection duct 60 is preferably in fluid communication with the duct 26.

At the saturator 58, therefore, the second step for controlled oxygenation of the beverage is performed by blowing in a second quantity of oxygen O2_INS2 released to the beverage once it has left the infuser.

The control means 70 preferably also control the flowmeter 62 so as to regulate the blowing in of the oxygen O2_INS2.

Downstream of the second saturator 58 advantageously there is arranged a probe 64 for measuring the oxygen O2_3 dissolved in the alcoholic beverage flowing out of the second saturator 58.

At this third probe 64 the third step of measuring the concentration of the oxygen dissolved in the alcoholic beverage is performed.

The values detected by this probe 64 may also be transmitted in a suitably processed form to the control means 70 by means of which the second quantity of oxygen introduced into the alcoholic beverage at the saturator 58 may be varied.

As mentioned above, the blowing-in of a second quantity of oxygen at the saturator 58 allows ageing of the alcoholic beverage after the latter has already undergone refinement from the point of view of the aroma in the infuser.

The operation of the plant 1 involves during start-up step opening of the valve 13 located at the inlet 12 of the duct 10, and opening of the valve 54 located at the inlet 34 of the infuser 31.

At the same time as opening of the valves, the pump 22 is started in order to allow filling of the infuser 31.

By means of the probe 44 and the probe 46 the temperatures and pH of the product undergoing refinement may be controlled, while by means of the probe 48 there will be a first characterization of the alcoholic beverage, by means of determination of the type and quantity of the polyphenols contained in the beverage undergoing refinement.

During filling of the infuser advantageously the level of oxygen dissolved in the beverage entering the infuser and the redox potential E1 may advantageously also be measured by means of the probe 50 and the probe 30.

Once the chamber 32 of the infuser has been filled, the concentration of oxygen dissolved in the beverage output from the infuser is determined by means of the probe 38, and the redox potential is measured by means of the probe 56.

The control means, based on the data received from the probes 44, 46, 48 and based on the concentrations of oxygen measured at the outlet of the infuser 31 and at the outlet of the second saturator 58, will vary the quantity of oxygen blown into the first and second saturators, as well as the flow fraction to be transferred again to the infuser, until an equilibrium in the system is obtained.

From the above description the main advantages which can be achieved with the process and the plant according to the present invention are evident.

By means of the teachings of the present invention it is possible to perform the refinement of wines, liqueurs and beers, obviously using suitable ad hoc wood substances, without having to employ specialized labour and allowing the various process steps to be carried out in a non-subjective manner.

Automatically a weighed quantity of oxygen equal to the maximum quantity which can be absorbed by the beverage without being affected by oxidation processes may be dissolved in the beverage which is to undergo refinement.

This allows the duration of the refinement step to be reduced without adversely affecting the quantity of the final product.

Moreover, the possibility of dissolving a weighed quantity of oxygen in the beverage after it has flowed into the infuser allows ageing of the beverage to be accelerated by up to 6-9 months.

Furthermore, with the method it is possible to use an infuser which is not necessarily a wooden barrel, such as a steel tank filled with wooden fragments, or a panel exchanger. with the consequent advantages from the cost and management point of view. For example, it is not required to perform topping-up operations since the limited amount of time spent inside the infuser does not result in evaporation or absorption of the beverage to be treated by the wood essence of the infuser.

## Claims

1. Control method for a refinement process for alcoholic beverages, comprising:
(a) a first step of controlled oxygenation, by means of controlled blowing-in of a first quantity of oxygen (O2_INS1) into the alcoholic beverage to undergo refinement;
(b) a first step of measuring the concentration of oxygen dissolved in the alcoholic beverage to undergo refinement, in order to determine a first concentration value of the oxygen (O2_1);
(c) a refinement step (c) in which the alcoholic beverage is placed in contact, inside an infuser, with one or more wood essences, in order to acquire the aromatic characteristics associated with said wood essences;
(d) a second step of measuring the concentration of oxygen dissolved in the alcoholic beverage output from the refinement step c), in order to determine a second concentration value of the oxygen (O2_2);
(e) a step of analysing the second concentration value of the oxygen (O2_2) dissolved in the alcoholic beverage once the refinement step c) has been performed; depending on the second oxygen concentration value (O2_2) measured, said analysis step resulting in:
i) a recycling of the alcoholic beverage to the refinement step c) and/or the transfer of the alcoholic beverage inside a storage tank; and
ii) in a possible variation of the first quantity of oxygen (O2_INS1) blown into the alcoholic beverage before the refinement step c).

2. Method according to Claim 1, **characterized in that**, following the analysis step e), a first fraction of the alcoholic beverage flow output from the refinement step c) is sent back to the same refinement step c), and a second fraction, equal to the total flow less the first fraction, is transferred inside said storage tank.

3. Method according to Claim 2, **characterized in that** said first fraction is equal to 30-40% of the flow of alcoholic beverage output from the refinement step c).

4. Method according to Claim 2, **characterized in that** said first fraction is equal to 100% of the flow of the alcoholic beverage output from the refinement step c) or **in that** said second fraction is equal to 100% of the flow of the alcoholic beverage output from the refinement step c).

5. Method according to Claim 1, **characterized in that** it comprises, upstream of the first oxygenation step a), a step of electrochemical analysis of the alcoholic beverage in order to obtain an estimate of the quantity and quality of the polyphenols contained in the alcoholic beverage before said beverage is subjected to the refinement step c).

6. Method according to Claim 5, **characterized in that** the values measured during said alcoholic beverage electrochemical analysis step are processed, together with the second concentration value of the oxygen (O2_2), during the analysis step e) for determining any variation in the quantity of oxygen (O2_INS1) to be blown into the beverage undergoing refinement.

7. Method according to Claim 5, **characterized in that** the values measured during said alcoholic beverage electrochemical analysis step are processed, together with the second concentration value of the oxygen (O2_2), during the analysis step e) for determining the recycling of the alcoholic beverage to the refinement step c) and/ or the transfer of the alcoholic beverage to the storage tank.

8. Method according to Claim 1, **characterized in that** it comprises, before the refinement step c), a first step of measuring the oxidation/reduction potential of the alcoholic beverage in order to obtain a first redox reference value (E1) and, after the refinement step c), a second step of measuring the oxidation/reduction potential of the alcoholic beverage in order to obtain a second redox reference value (E2).

9. Method according to Claim 8, **characterized in that** it involves a step of replacing the wood essence used in the refinement step c) if there is no divergence or there is a minimum divergence between the first redox reference value (El) and the second redox reference value (E2).

10. Method according to Claim 1, **characterized in that** it comprises a second step of controlled oxygenation by means of controlled blowing-in of a second quantity of oxygen (O2_INS2) into the alcoholic beverage output from the refinement step c).

11. Method according to Claim 10, **characterized in that** it comprises, downstream of the second controlled oxygenation step, a third step of measuring the concentration of the oxygen dissolved in the alcoholic beverage, in order to determine a third oxygen concentration value (O2_3).

12. Method according to Claim 11, **characterized in that** said third oxygen concentration value (O2_3) is processed during the analysis step e), together with the second oxygen concentration value (O2_2), so as to perform, at the end of the second oxygenation step, the further recycling of the alcoholic beverage to the refinement step c) and/ or the transfer of the alcoholic beverage to the storage tank or the variation in the quantity of oxygen (O2_INS2) to be blown in during the second controlled oxygenation step.

13. Method according to Claims 5 and 12, **characterized in that**, during the analysis step e), the values measured during the step for electrochemical analysis of the alcoholic beverage and the third oxygen concentration value (O2_3) are processed.

14. Plant (1) for implementing the control method for a refinement process for alcoholic beverages, according to any one of the preceding claims, said plant comprising:
- a duct (10) for supplying the alcoholic beverage, having an inlet (12) and an outlet (14); upstream of the outlet (14) there being arranged a diverter valve (18) suitable for diverting the alcoholic beverage introduced into the plant (1) towards the outlet (14) and/or towards a connection duct (20) in fluid communication with the supply duct (10);
- a pump (22), arranged along the supply duct (10), the delivery of which supplies a saturator (24) designed to introduce oxygen into the alcoholic beverage undergoing refinement; said saturator (24) being supplied with the oxygen introduced into the plant (1) via an auxiliary duct (26) provided with a flowmeter (27) for the controlled dosage of the oxygen in the saturator (24);
- a first probe (30) for measuring the oxygen concentration, positioned downstream of the saturator (24);
- an infuser (31), positioned downstream of said first measurement probe (30) and provided with a chamber (32) inside which there is arranged the at least one wood essence intended to come into contact with the beverage undergoing refinement;
- a second probe (38) for measuring the oxygen concentration, positioned downstream of the infuser (31);
- control means (70) for controlling the diverter valve (18) and the flowmeter (27); wherein
said control means (70) is operated by means of a computerized control unit; depending on the concentration value of oxygen measured by the second probe (38) said control means (70) directing the alcoholic beverage towards the outlet (14) and/or towards the duct (20) by means of the diverter valve (18) and said control means (70) being configured to vary the quantity of oxygen introduced into the alcoholic beverage at the saturator (24) by operating the flowmeter (27).

15. Plant according to Claim 14, **characterized in that** it comprises, upstream of the oxygen saturator (24), a probe (48) for electrochemical analysis of the alcoholic beverage undergoing refinement.

16. Plant according to Claim 15, **characterized in that** said probe (48) is a spectrometer.

17. Plant according to Claim 14, **characterized in that** it comprises a first probe (50) and a second probe (56) for calculation of the oxidation/reduction potential of the alcoholic beverage; said first probe (50) and said second probe (56) being positioned respectively upstream and downstream of the infuser (31).

18. Plant according to Claim 14, **characterized in that** it comprises a second saturator (58); said second saturator (58) being supplied with the oxygen introduced into the plant (1) via a connection duct (60) provided with a flowmeter (62) for the controlled dosage of the oxygen in the saturator (58).

19. Plant according to Claim 14, **characterized in that** the infuser (31) has an inlet (34) and an outlet (36) for the beverage undergoing refinement, which circulates inside the chamber (32) under forced flow conditions.

20. Plant according to Claim 14, **characterized in that** the infuser (31) is a steel or cement tank inside which fragments of wood in the form of chips or staves are immersed.

21. Plant according to Claim 14, **characterized in that** the infuser (31) is a wooden barrel provided with an inlet duct connected to the inlet (34) and an outlet duct connected to the outlet (36).

## Patentansprüche

1. Kontrollverfahren für einen Veredelungsprozess von alkoholischen Getränken, umfassend:
(a) einen ersten Schritt der kontrollierten Sauerstoffanreicherung mittels kontrollierten Einblasens einer ersten Menge an Sauerstoff (O2_INS1) in das alkoholische Getränk, das einer Veredelung unterzogen werden soll;
(b) einen ersten Schritt des Messens der Konzentration an gelöstem Sauerstoff in dem alkoholischen Getränk, das einer Veredelung unterzogen werden soll, um einen ersten Konzentrationswert des Sauerstoffs (O2_1) zu bestimmen;
(c) einen Veredelungsschritt (c), bei dem das alkoholische Getränk im Inneren eines Infusors mit einer oder mehreren Holzessenzen in Kontakt gebracht wird, um die mit den Holzessenzen assoziierten aromatischen Eigenschaften zu erhalten;
(d) einen zweiten Schritt des Messens der Konzentration an gelöstem Sauerstoff in dem alkoholischen Getränk, das aus dem Veredelungsschritt c) hervorgeht, um einen zweiten Konzentrationswert des Sauerstoffs (O2_2) zu bestimmen;
(e) einen Schritt des Analysierens des zweiten Konzentrationswerts des gelösten Sauerstoffs (O2_2) in dem alkoholischen Getränk, sobald der Veredelungsschritt c) durchgeführt worden ist; wobei abhängig von dem gemessenen zweiten Sauerstoffkonzentrationswert (O2_2) der Analyseschritt zu Folgendem führt:
i) eine Rückführung des alkoholischen Getränks zum Veredelungsschritt c) und/oder die Überführung des alkoholischen Getränks in einen Lagertank; und
ii) eine mögliche Variation der ersten Menge an Sauerstoff (O2_INS1), die in das alkoholische Getränk vor dem Veredelungsschritt c) eingeblasen wird.

2. Verfahren nach Anspruch 1, **dadurch gekennzeichnet, dass** nach dem Analyseschritt e) eine erste Fraktion des aus dem Veredelungsschritt c) hervorgegangenen Durchflusses des alkoholischen Getränks zu demselben Veredelungsschritt c) zurückgeführt wird und eine zweite Fraktion, die dem Gesamtdurchflusses abzüglich der ersten Fraktion entspricht, in den Lagertank überführt wird.

3. Verfahren nach Anspruch 2, **dadurch gekennzeichnet, dass** die erste Fraktion 30-40 % des Durchflusses des aus dem Veredelungsschritt c) hervorgegangenen alkoholischen Getränks entspricht.

4. Verfahren nach Anspruch 2, **dadurch gekennzeichnet, dass** die erste Fraktion 100 % des Durchflusses des aus dem Veredelungsschritt c) hervorgegangenen alkoholischen Getränks entspricht oder dass die zweite Fraktion 100 % des Durchflusses des aus dem Veredelungsschritt c) hervorgegangenen alkoholischen Getränks entspricht.

5. Verfahren nach Anspruch 1, **dadurch gekennzeichnet, dass** es stromaufwärts des ersten Sauerstoffanreicherungsschrittes a) einen Schritt der elektrochemischen Analyse des alkoholischen Getränks umfasst, um eine Schätzung der Menge und Qualität der in dem alkoholischen Getränk enthaltenen Polyphenole zu erhalten, bevor das Getränk dem Veredelungsschritt c) unterzogen wird.

6. Verfahren nach Anspruch 5, **dadurch gekennzeichnet, dass** die während des Schrittes der elektrochemischen Analyse des alkoholischen Getränks gemessenen Werte zusammen mit dem zweiten Konzentrationswert des Sauerstoffs (O2_2) während des Analyseschrittes e) zum Bestimmen jeglicher Variation in der Menge an Sauerstoff (O2_INS1), die in das Getränk, das einer Veredelung unterzogen wird, eingeblasen werden soll, verarbeitet werden.

7. Verfahren nach Anspruch 5, **dadurch gekennzeichnet, dass** die während des Schrittes der elektrochemischen Analyse des alkoholischen Getränks gemessenen Werte zusammen mit dem zweiten Konzentrationswert des Sauerstoffs (O2_2) während des Analyseschrittes e) zum Bestimmen der Rückführung des alkoholischen Getränks zum Veredelungsschritt c) und/oder der Überführung des alkoholischen Getränks in den Lagertank verarbeitet werden.

8. Verfahren nach Anspruch 1, **dadurch gekennzeichnet, dass** es vor dem Veredelungsschritt c) einen ersten Schritt des Messens des Oxidations-/Reduktionspotentials des alkoholischen Getränks, um einen ersten Redox-Referenzwert (E1) zu erhalten, und nach dem Veredelungsschritt c) einen zweiten Schritt des Messens des Oxidations-/Reduktionspotentials des alkoholischen Getränks umfasst, um einen zweiten Redox-Referenzwert (E2) zu erhalten.

9. Verfahren nach Anspruch 8, **dadurch gekennzeichnet, dass** es einen Schritt des Ersetzens der in dem Veredelungsschritt c) verwendeten Holzessenz beinhaltet, wenn es keine Abweichung gibt oder es eine minimale Abweichung zwischen dem ersten Redox-Referenzwert (E1) und dem zweiten Redox-Referenzwert (E2) gibt.

10. Verfahren nach Anspruch 1, **dadurch gekennzeichnet, dass** es einen zweiten Schritt der kontrollierten Sauerstoffanreicherung mittels kontrolliertem Einblasen einer zweiten Menge an Sauerstoff (O2_INS2) in das alkoholische Getränk, das aus dem Veredelungsschritt c) hervorgeht, umfasst.

11. Verfahren nach Anspruch 10, **dadurch gekennzeichnet, dass** es, stromabwärts des zweiten Schrittes der kontrollierten Sauerstoffanreicherung, einen dritten Schritt des Messens der Konzentration des im alkoholischen Getränk gelösten Sauerstoffs umfasst, um einen dritten Sauerstoffkonzentrationswert (O2_3) zu bestimmen.

12. Verfahren nach Anspruch 11, **dadurch gekennzeichnet, dass** der dritte Sauerstoffkonzentrationswert (O2_3) während des Analyseschrittes e) zusammen mit dem zweiten Sauerstoffkonzentrationswert (O2_2) verarbeitet wird, um so am Ende des zweiten Sauerstoffanreicherungsschrittes die weitere Rückführung des alkoholischen Getränks zum Veredelungsschritt c) und/oder die Überführung des alkoholischen Getränks in den Lagertank oder die Variation der Menge an Sauerstoff (O2_INS2), die während des zweiten kontrollierten Sauerstoffanreicherungsschrittes eingeblasen werden soll, durchzuführen.

13. Verfahren nach den Ansprüchen 5 und 12, **dadurch gekennzeichnet, dass** während des Analyseschrittes e) die während des Schrittes zur elektrochemischen Analyse des alkoholischen Getränks gemessenen Werte und der dritte Sauerstoffkonzentrationswert (O2_3) verarbeitet werden.

14. Anlage (1) zum Implementieren des Kontrollverfahrens für einen Veredelungsprozess für alkoholische Getränke nach irgendeinem der vorhergehenden Ansprüche, wobei die Anlage Folgendes umfasst:
- eine Leitung (10) zum Zuführen des alkoholischen Getränks, die einen Einlass (12) und einen Auslass (14) aufweist; wobei stromaufwärts des Auslasses (14) ein Umlenkventil (18) angeordnet ist, das zum Umlenken des in die Anlage (1) eingeführten alkoholischen Getränks zum Auslass (14) und/oder zu einer mit der Zuführleitung (10) in Flüssigkeitsverbindung stehenden Verbindungsleitung (20) geeignet ist;
- eine Pumpe (22), die entlang der Zuführleitung (10) angeordnet ist, deren Förderung einen Sättiger (24) versorgt, der ausgelegt ist, um Sauerstoff in das alkoholische Getränk, das einer Veredelung unterzogen wird, einzuführen; wobei der Sättiger (24) mit dem in die Anlage (1) eingeführten Sauerstoff über eine Hilfsleitung (26) versorgt wird, die mit einem Durchflussmesser (27) für die kontrollierte Dosierung des Sauerstoffs im Sättiger (24) versehen ist;
- eine erste Sonde (30) zum Messen der Sauerstoffkonzentration, die stromabwärts des Sättigers (24) positioniert ist;
- einen Infusor (31), der stromabwärts der ersten Messsonde (30) positioniert und mit einer Kammer (32) versehen ist, innerhalb derer mindestens eine Holzessenz angeordnet ist, die dazu bestimmt ist, mit dem Getränk, das einer Veredelung unterzogen wird, in Kontakt zu kommen;
- eine zweite Sonde (38) zum Messen der Sauerstoffkonzentration, die stromabwärts des Infusors (31) positioniert ist;
- Steuermittel (70) zum Steuern des Umlenkventils (18) und des Durchflussmessers (27); wobei
die Steuermittel (70) mittels einer computergestützten Steuereinheit betrieben werden; wobei die Steuermittel (70) abhängig von dem von der zweiten Sonde (38) gemessenen Konzentrationswert des Sauerstoffs das alkoholische Getränk mittels des Umleitungsventils (18) zum Auslass (14) und/oder zur Leitung (20) leiten und die Steuermittel (70) ausgestaltet sind, um die in das alkoholische Getränk am Sättiger (24) eingeführte Menge an Sauerstoff durch Betreiben des Durchflussmessers (27) zu variieren.

15. Anlage nach Anspruch 14, **dadurch gekennzeichnet, dass** sie, stromaufwärts des Sauerstoffsättigers (24), eine Sonde (48) für die elektrochemische Analyse des alkoholischen Getränks, das einer Veredelung unterzogen wird, umfasst.

16. Anlage nach Anspruch 15, **dadurch gekennzeichnet, dass** die Sonde (48) ein Spektrometer ist.

17. Anlage nach Anspruch 14, **dadurch gekennzeichnet, dass** sie eine erste Sonde (50) und eine zweite Sonde (56) zur Berechnung des Oxidations-/Reduktionspotentials des alkoholischen Getränks umfasst; wobei die erste Sonde (50) und die zweite Sonde (56) stromaufwärts bzw. stromabwärts des Infusors (31) positioniert sind.

18. Anlage nach Anspruch 14, **dadurch gekennzeichnet, dass** sie einen zweiten Sättiger (58) umfasst; wobei der zweite Sättiger (58) über eine Verbindungsleitung (60), die mit einem Durchflussmesser (62) für die kontrollierte Dosierung des Sauerstoffs im Sättiger (58) versehen ist, mit dem in die Anlage (1) eingeführten Sauerstoff versorgt wird.

19. Anlage nach Anspruch 14, **dadurch gekennzeichnet, dass** der Infusor (31) einen Einlass (34) und einen Auslass (36) für das Getränk, das einer Veredelung unterzogen wird, aufweist, das innerhalb der Kammer (32) unter Zwangsdurchflussbedingungen zirkuliert.

20. Anlage nach Anspruch 14, **dadurch gekennzeichnet, dass** der Infusor (31) ein Stahl- oder Zementtank ist, innerhalb dessen Holzfragmente in Form von Spänen oder Dauben eingetaucht sind.

21. Anlage nach Anspruch 14, **dadurch gekennzeichnet, dass** der Infusor (31) ein Holzfass ist, das mit einer mit dem Einlass (34) verbundenen Einlassleitung und einer mit dem Auslass (36) verbundenen Auslassleitung versehen ist.

## Revendications

1. Procédé de régulation d'un processus de raffinage de boissons alcoolisées, comprenant :
(a) une première étape d'oxygénation régulée, par insufflation régulée d'une première quantité d'oxygène (O2_INS1) dans la boisson alcoolisée à raffiner ;
(b) une première étape de mesure de la concentration d'oxygène dissous dans la boisson alcoolisée à raffiner, afin de déterminer une première valeur de concentration de l'oxygène (O2_l) ;
(c) une étape de raffinage (c) dans laquelle la boisson alcoolisée est mise en contact, à l'intérieur d'un infuseur, avec une ou plusieurs essences de bois, afin d'acquérir les caractéristiques aromatiques associées auxdites essences de bois ;
(d) une deuxième étape de mesure de la concentration d'oxygène dissous dans la boisson alcoolisée issue de l'étape de raffinage c), afin de déterminer une deuxième valeur de concentration de l'oxygène (O2_2) ;
(e) une étape d'analyse de la deuxième valeur de concentration de l'oxygène (O2_2) dissous dans la boisson alcoolisée une fois l'étape de raffinage c) réalisée ; en fonction de la deuxième valeur de concentration en oxygène (O2_2) mesurée, ladite étape d'analyse aboutissant à :
(i) un recyclage de la boisson alcoolisée vers l'étape de raffinage c) et/ou le transfert de la boisson alcoolisée à l'intérieur d'une cuve de stockage ; et
(ii) une variante possible de la première quantité d'oxygène (O2_INS1) insufflée dans la boisson alcoolisée avant l'étape de raffinage c).

2. Procédé selon la revendication 1, **caractérisé en ce que**, suite à l'étape d'analyse e), une première fraction du débit de boisson alcoolisée issue de l'étape de raffinage c) est renvoyée vers la même étape de raffinage c), et une seconde fraction, égale au débit total moins la première fraction, est transférée à l'intérieur de ladite cuve de stockage.

3. Procédé selon la revendication 2, **caractérisé en ce que** ladite première fraction est égale à 30 à 40 % du débit de boisson alcoolisée issue de l'étape de raffinage c).

4. Procédé selon la revendication 2, **caractérisé en ce que** ladite première fraction est égale à 100 % du débit de la boisson alcoolisée issue de l'étape de raffinage c) ou **en ce que** ladite seconde fraction est égale à 100 % du débit de la boisson alcoolisée issue de l'étape de raffinage c).

5. Procédé selon la revendication 1, **caractérisé en ce qu'**il comprend, en amont de la première étape d'oxygénation a), une étape d'analyse électrochimique de la boisson alcoolisée afin d'obtenir une estimation de la quantité et de la qualité des polyphénols contenus dans la boisson alcoolisée avant que ladite boisson ne soit soumise à l'étape de raffinage c).

6. Procédé selon la revendication 5, **caractérisé en ce que** les valeurs mesurées lors de ladite étape d'analyse électrochimique de boisson alcoolisée sont traitées, conjointement avec la seconde valeur de concentration de l'oxygène (O2_2), lors de l'étape d'analyse e) afin de déterminer une quelconque variation de la quantité d'oxygène (O2_INS1) à insuffler dans la boisson en cours de raffinage.

7. Procédé selon la revendication 5, **caractérisé en ce que** les valeurs mesurées lors de ladite étape d'analyse électrochimique de boisson alcoolisée sont traitées, conjointement avec la seconde valeur de concentration de l'oxygène (O2_2), lors de l'étape d'analyse e) afin de déterminer le recyclage de la boisson alcoolisée vers l'étape de raffinage c) et/ou le transfert de la boisson alcoolisée vers la cuve de stockage.

8. Procédé selon la revendication 1, **caractérisé en ce qu'**il comprend, avant l'étape de raffinage c), une première étape de mesure du potentiel d'oxydo-réduction de la boisson alcoolisée afin d'obtenir une première valeur redox de référence (E1) et, après l'étape de raffinage c), une seconde étape de mesure du potentiel d'oxydo-réduction de la boisson alcoolisée afin d'obtenir une seconde valeur redox de référence (E2).

9. Procédé selon la revendication 8, **caractérisé en ce qu'**il comporte une étape de remplacement de l'essence de bois utilisée à l'étape de raffinage c) s'il n'y a pas d'écart ou s'il y a un écart minimal entre la première valeur redox de référence (E1) et la seconde valeur redox de référence (E2).

10. Procédé selon la revendication 1, **caractérisé en ce qu'**il comprend une seconde étape d'oxygénation régulée par insufflation régulée d'une seconde quantité d'oxygène (O2_INS2) dans la boisson alcoolisée issue de l'étape de raffinage c).

11. Procédé selon la revendication 10, **caractérisé en ce qu'**il comprend, en aval de la seconde étape d'oxygénation régulée, une troisième étape de mesure de la concentration de l'oxygène dissous dans la boisson alcoolisée, afin de déterminer une troisième valeur de concentration en oxygène (O2_3).

12. Procédé selon la revendication 11, **caractérisé en ce que** ladite troisième valeur de concentration en oxygène (O2_3) est traitée lors de l'étape d'analyse e), conjointement avec la deuxième valeur de concentration en oxygène (O2_2), de manière à réaliser, à la fin de la seconde étape d'oxygénation, le recyclage ultérieur de la boisson alcoolisée vers l'étape de raffinage c) et/ou le transfert de la boisson alcoolisée vers la cuve de stockage ou la variation de la quantité d'oxygène (O2_INS2) à insuffler lors de la seconde étape d'oxygénation régulée.

13. Procédé selon les revendications 5 et 12, **caractérisé en ce que**, lors de l'étape d'analyse e), les valeurs mesurées lors de l'étape d'analyse électrochimique de la boisson alcoolisée et la troisième valeur de concentration en oxygène (O2_3) sont traitées.

14. Installation (1) pour la mise en œuvre du procédé de régulation d'un processus de raffinage de boissons alcoolisées, selon l'une quelconque des revendications précédentes, ladite installation comprenant :
- un conduit (10) d'alimentation en boisson alcoolisée, présentant une entrée (12) et une sortie (14) ; en amont de la sortie (14) est disposée une vanne de dérivation (18) adaptée pour dévier la boisson alcoolisée introduite dans l'installation (1) vers la sortie (14) et/ou vers un conduit de liaison (20) en communication fluidique avec le conduit d'alimentation (10) ;
- une pompe (22), disposée le long du conduit d'alimentation (10), dont le débit alimente un saturateur (24) destiné à introduire de l'oxygène dans la boisson alcoolisée en cours de raffinage ; ledit saturateur (24) étant alimenté en oxygène introduit dans l'installation (1) par l'intermédiaire d'un conduit auxiliaire (26) pourvu d'un débitmètre (27) pour le dosage régulé de l'oxygène dans le saturateur (24) ;
- une première sonde (30) destinée à mesurer la concentration en oxygène, positionnée en aval du saturateur (24) ;
- un infuseur (31), positionné en aval de ladite première sonde (30) de mesure et pourvu d'une chambre (32) à l'intérieur de laquelle est disposée l'au moins une essence de bois destinée à entrer en contact avec la boisson en cours de raffinage ;
- une seconde sonde (38) destinée à mesurer la concentration en oxygène, positionnée en aval de l'infuseur (31) ;
- des moyens de régulation (70) destinés à réguler la vanne de dérivation (18) et le débitmètre (27) ; dans laquelle
ledit moyen de régulation (70) est actionné au moyen d'une unité de régulation informatisée ; en fonction de la valeur de concentration d'oxygène mesurée par la seconde sonde (38), ledit moyen de régulation (70) dirige la boisson alcoolisée vers la sortie (14) et/ou vers le conduit (20) au moyen de la vanne de dérivation (18) et ledit moyen de régulation (70) étant configuré pour faire varier la quantité d'oxygène introduite dans la boisson alcoolisée au niveau du saturateur (24) en actionnant le débitmètre (27).

15. Installation selon la revendication 14, **caractérisée en ce qu'**elle comprend, en amont du saturateur d'oxygène (24), une sonde (48) d'analyse électrochimique de la boisson alcoolisée en cours de raffinage.

16. Installation selon la revendication 15, **caractérisée en ce que** ladite sonde (48) est un spectromètre.

17. Installation selon la revendication 14, **caractérisée en ce qu'**elle comprend une première sonde (50) et une seconde sonde (56) destinées à calculer le potentiel d'oxydo-réduction de la boisson alcoolisée ; ladite première sonde (50) et ladite seconde sonde (56) étant positionnées respectivement en amont et en aval de l'infuseur (31).

18. Installation selon la revendication 14, **caractérisée en ce qu'**elle comprend un second saturateur (58) ; ledit second saturateur (58) étant alimenté en oxygène introduit dans l'installation (1) par un conduit de liaison (60) pourvu d'un débitmètre (62) pour le dosage régulé de l'oxygène dans le saturateur (58).

19. Installation selon la revendication 14, **caractérisée en ce que** l'infuseur (31) présente une entrée (34) et une sortie (36) pour la boisson en cours de raffinage, qui circule à l'intérieur de la chambre (32) dans des conditions d'écoulement forcé.

20. Installation selon la revendication 14, **caractérisée en ce que** l'infuseur (31) est une cuve en acier ou en ciment à l'intérieur de laquelle sont immergés des fragments de bois sous forme de copeaux ou de douelles.

21. Installation selon la revendication 14, **caractérisée en ce que** l'infuseur (31) est un tonneau en bois pourvu d'un conduit d'entrée relié à l'entrée (34) et d'un conduit de sortie relié à la sortie (36).
